# EUROPEAN PATENT SPECIFICATION

(11) **EP 4 021 736 B1**
(45) Date of publication and mention of the grant of the patent: **01.04.2026**
(21) Application number: 20859324.4
(22) Date of filing: 27.08.2020
(51) Int. Cl.: B60B 7/00, B05B 7/00, B05B 7/20, B05D 7/14, B05D 7/24, B29C 45/16, B60B 3/02, B05D 5/06, B44C 1/10, B44C 3/02

(54) **DECORATIVE APPLIQUE WITH POLYMERIC OVER-COATING AND METHOD OF APPLYING SAME**
DEKORATIVE APPLIKATION MIT POLYMERER ÜBERBESCHICHTUNG UND VERFAHREN ZUR ANWENDUNG DAVON
APPLIQUE DÉCORATIVE À SUR-REVÊTEMENT POLYMÈRE ET SON PROCÉDÉ D'APPLICATION

(30) Priority: 27.08.2019 US 201962892208 P
(43) Date of publication of application: 06.07.2022
(73) Proprietor: Superior Industries International, Inc., Southfield, Michigan 48033 (US)
(72) Inventor: CHENAULT, Henry Clay, III, Fayetteville, AR 72704 (US); WATTS, Christopher Allen, Milford, MI 48381 (US)
(74) Representative: Bardehle Pagenberg Partnerschaft mbB Patentanwälte Rechtsanwälte
(86) International application number: PCT/US2020/048197
(87) International publication number: WO 2021/041674

(56) References cited:
- WO-A1-2019/115487
- DE-A1- 2 935 584
- US-A1- 2004 124 693
- US-A1- 2007 018 496
- US-A1- 2012 135 208
- US-A1- 2013 076 105
- US-A1- 2015 239 286
- US-A1- 2015 239 286
- US-A1- 2017 129 279
- US-B1- 6 443 531

## Description

### PRIOR APPLICATIONS

The present application claims priority to United States Provisional Patent Application No. 62/890,208 filed on August 27, 2019.

### TECHNICAL FIELD

The present invention relates generally toward application of decorative features to a vehicle component. More specifically, the present invention relates toward a vehicle wheel with a decorative applique and a method of manufacturing same.

### BACKGROUND

Ever increasing consumer desires with regard to customized passenger vehicles have caused vehicle manufacturers and their suppliers to identify unique distinguishing features. Vehicle wheels have not been exempted from these consumer desires. In addition, it is becoming increasingly desirable to include unique brand identifiers on, for example, vehicle wheels. Therefore, wheel manufacturers have been seeking different manufacturing techniques that provide distinguishing features including machining unique features into the wheel alloy, unique coating technologies and the addition of metallic layers.

Unique performance requirements of vehicle wheels have prevented additional distinguishing features, such as adhering appliques, in the form of brand identifiers and the like. Application of these items has not been attempted due to durability deficiencies when subject the rigors of, for example, dirt and gravel roads, road salt, and other environmental contaminants. However, there is a market desire to include distinguishing features on vehicle wheels that, to date, could only be provided by way of an applique. Therefore, there is a significant need to develop a process and technique for applying distinguishing features to a wheel that would enable application of unique brand identifiers to a wheel while still providing necessary durability and performance. US 2007/0018496 A1 discloses a vehicle wheel with a decorative applique.

### SUMMARY

The invention is set out in the appended set of claims. A vehicle wheel is defined by a wheel substrate including a face and a rim portion. The face defines a plurality of spokes extending radially outwardly between a central portion defined by the face and the rim portion. An applique including a decorative feature that is distinguishable from the wheel is affixed to a mating portion of the wheel. A polymer over-coating is applied over the applique and the wheel that is substantially transparent covering the applique and the wheel defining a continuous polymer surface over the applique and the wheel substrate.

Significant efforts have been expended to develop polymeric coatings for wheels that are capable of withstanding environmental rigors of a wide range of road surfaces and other environmental factors. However, appliques and labels have not been capable of providing requisite durability when applied over these coatings. This problem is overcome by the invention of the present application. The inventive process of applying durable polymer coatings over the applique and the wheel after the applique has been adhered to a wheel provides the benefit of providing performance characteristics of the polymer coating while protecting the applique from known environmental contaminants. In addition, unique tinting, coloring and pigmenting techniques applied to the polymeric over-coating can provide additional unique appearance characteristics. For example, presenting a continuous polymer surface offers esthetic characteristic previously not available to vehicle wheels. The continuous polymeric over-coating presents a same gloss level over both the applique and the wheel surface giving the appearance of the applique being part of the wheel substrate.

### BRIEF DESCRIPTION OF THE DRAWINGS

Other advantages of the present invention will be readily appreciated, as the same becomes better understood by reference to the following detailed description when considered in connection with the accompanying drawings, wherein:
Figure 1 shows a partial perspective view of a wheel including a decorative applique;
Figure 2 shows cross-section of a first embodiment of a wheel of the present invention;
Figure 3 shows a cross-section of a second embodiment of a wheel of the present invention;
Figure 4 shows a cross-section of a third embodiment of a wheel of the present invention;
Figure 5 shows a cross-section of a fourth embodiment of a wheel of the present invention;
Figure 6 shows a cross-section of a fifth embodiment of a wheel of the present invention;
Figure 7 shows a cross-section of a sixth embodiment of a wheel of the present invention;
Figure 8 shows a cross-section of a seventh embodiment of a wheel of the present invention;
Figure 9 shows a cross-section of an eighth embodiment of a wheel of the present invention;
Figure 10 shows a partial perspective view of a wheel including an alternative applique providing a textured appearance;
Figure 11 shows a partial perspective view of an applique disposed in a recessed portion of a face of the wheel;
Figure 12 shows a cross-section through line 12-12 of Figure 11; and
Figure 13 shows a flow chart of a process for manufacturing a wheel including the inventive decorative applique.

### DETAILED DESCRIPTION

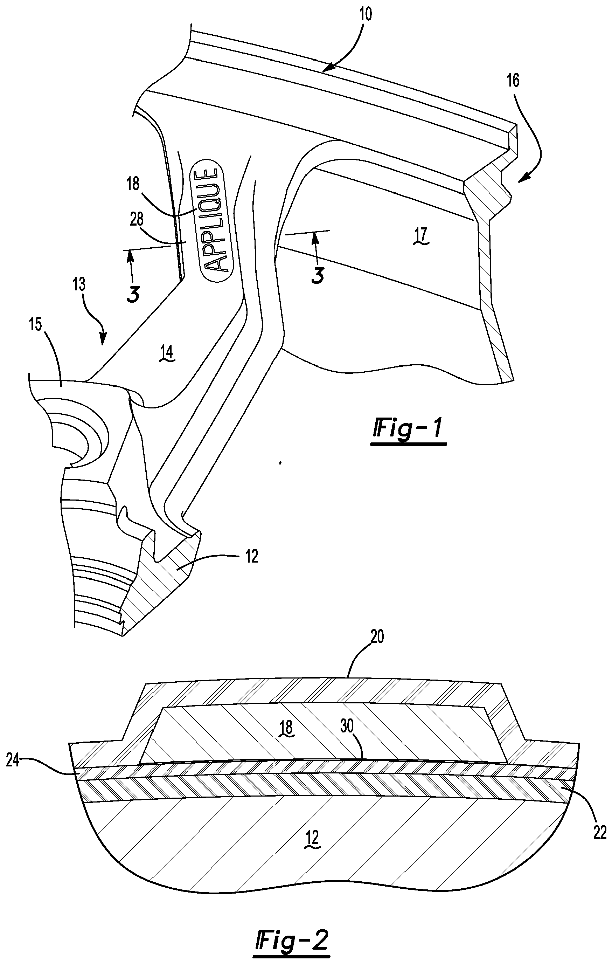

Referring to Figure 1, a partial perspective view of a wheel of the present invention is generally shown at 10. The wheel 10 includes a formed wheel substrate 12 defining a face 13 and a rim portion 16. Spokes 14 extend between a central portion 15 of the face 13 and a bead 17 defined by the rim portion 16 that defines a periphery of the wheel 10. A decorative applique 18 is adhered to one of the spokes 14 presenting, in this embodiment, the brand identifier shown "APPLIQUE". It should be understood that the brand identifier shown in Figure 1 is merely exemplary and may be replace by alternative identifiers or slogans, including but not limited to third party brands, wheel brands, customer brands, etc. In addition, the applique 18 may present a texture or patterns to the wheel that previously required complex tooling or machining to form into substrate 12 as will be explained further herein below.

By way of example, the applique 18 is contemplated take many forms. In one embodiment, the applique 18 is a two dimensional decal presenting brand names, patterns, slogans, and any number of alternatives and combinations. In an alternative embodiment, the applique 18 is a three dimensional component that is painted, coated, chromed, or decorated in any manner that may be complementary to the wheel 10 or message being conveyed. The applique 18 is contemplated to include lettering or graphical features extending upwardly from a base for providing additional distinguishing characteristics. Additionally, the applique 18 is contemplated to include coloring that blends with a wheel 10 color or coloring that contrasts with the wheel 10 coloring. Additional distinguishing features are exhibited when the applique 18 is affixed to the wheel substrate 12 that presents an alloy background appearance to the applique 18 that will also be explained further hereinbelow.

Referring now to Figure 2, a first embodiment shows the applique 18 affixed to the wheel 10. A polymeric over-coating 20 is applied over the wheel 10 and the applique 18 presenting a continuous polymeric surface extending over both the wheel 10 and the applique 18 as disclosed hereinabove. The polymeric over-coating 20, in one embodiment is a clear coating presenting a consistent or same gloss level to the applique 18 and the wheel 10. In an alternative embodiment, the polymeric over-coating 20 is lightly pigmented or tinted uniformly providing depth or modified appearance to the wheel 10 and the applique 18. In a still further alternative embodiment, the polymeric over-coating 20 includes opalescent pigmentation providing an even further color shifting esthetic enhancement to the applique 18. Further, the polymeric over-coating includes any of a powder coating, an urethane, or any polymeric coating capable of providing desirable durability to the applique 18 (and the wheel 10). The applique 18 is heat resistant to at least the temperature required to cure the polymeric over-coating 20 in an industrial paint bake oven. The polymeric over-coating 20 includes ultraviolet absorbers to deter breakdown of the polymer chains and provide further durability to the applique 18 by preventing ultraviolet degradation.

It should be understood that alternative coating techniques may be used to apply the clear coat or polymeric over-coat 20 over the applique 18. As set forth above, one embodiment, the polymeric over-coat 18 is a powder coating. Alternatively, the clear coat 20 can be a one or two component urethane. After applying the polymeric over-coat 20 over the applique 18 and wheel 10, the wheel 10 is subject to a curing step in a bake oven. Therefore, the applique 18 is capable of withstanding curing temperatures of the polymeric overcoat 20 that could exceed 280°F. Alternatively, the curing temperature of the polymeric overcoat 20 is adjusted to accommodate lower thermal limits of the applique 18.

A primer or base polymeric coating 22 is applied to the wheel 10 prior to adhering the applique 18 to the wheel 10. The base polymeric coating 22 provides durability to the wheel by improving adhesion of the polymeric over-coatings 20 and inhibits corrosion. An intermediate polymeric coating 24 providing a pigmented base color is applied over the primer or base polymeric coating 22. Therefore, in this embodiment, the applique 18 is adhered to the intermediate polymeric coating 24.

In an alternative not covered by the present claims, the polymeric over-coat 20 is cured by way of exposure to infrared (IR) light to accommodate lower thermal limits of the applique 18. IR curing techniques are sometimes used for "spot repairs" in automotive assembly plants. However, regular production IR curing has not previously been used for automotive components, such as, for example, vehicle wheels. IR curing provides the potential to apply the polymeric over-coat 20 over the entire wheel surface, or only locally over the applique 18 while "feathering" the IR cured coating into previously applied and cured over-coat 20 or the intermediate polymeric coating 24 onto which the applique 18 is placed.

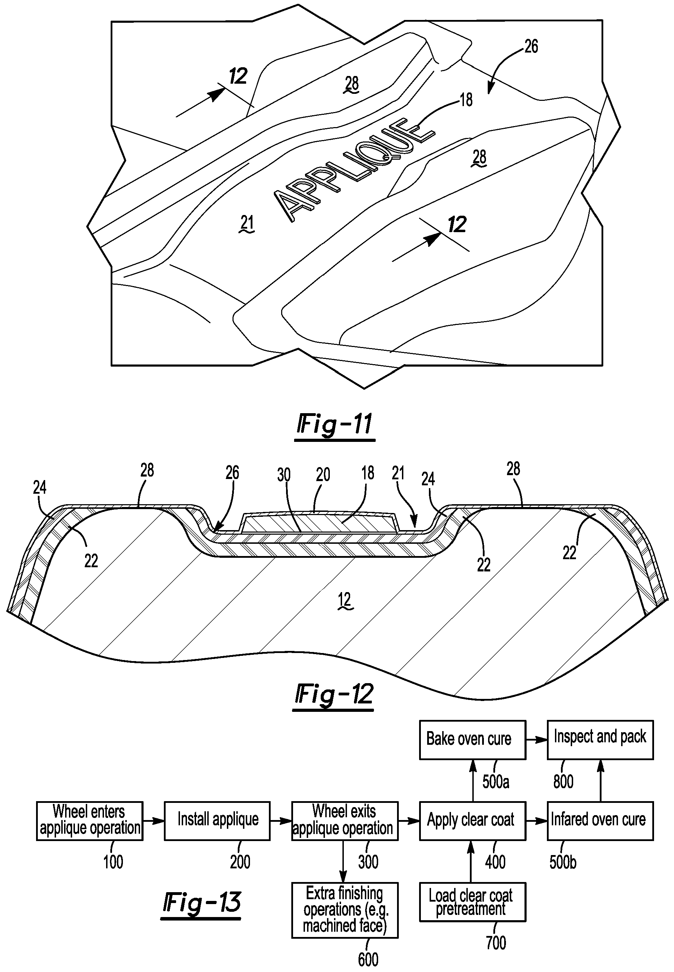

In a further embodiment, the wheel 10 may require additional cleaning and conversion after the applique 18 has been applied. In one embodiment, the applique 18 is applied to a mating portion 21 on a recessed surface 26 (as shown in Figure 11) that is spaced below an upper surface 28. The upper surface 28 is subsequently turned, machined, or milled to expose or reconfigure the face 13. In this embodiment, after turning, machining or milling, the wheel 10 is subsequently cleaned and provided a conversion coating in a known manner. Alternatively, the wheel 10 may be subject to a localized dry plasma conversion as disclosed in co-pending United States Patent Application Nos. 15/524,075 and 16/256,550. In either embodiment, the applique 18 is configured to withstand the additional processing without discernable degradation of appearance. It is contemplated by the inventors that subjecting the applique 18 to a conversion coating will also enhance adhesion of the polymeric over-coating 20 to the applique 18. Following cleaning and conversion, the polymeric over-coating 20, or equivalent is applied over the applique 18 as is described herein.

The applique 18, in one embodiment is a decal that is adhered to the wheel 10 with an adhesive 30. In another embodiment, the applique 18 is plastic or composite presenting a three dimensional structure providing an appearance of depth to the applique 18 that also is affixed to the wheel 10 with the adhesive 30. A snap or locating pin (not shown) may be included on a backside of the applique 18 to provide additional retention or assist locating the applique 18, if necessary. Alternatively, a template may be used to locate the applique, or backing paper or cover paper may be configured to locate the applique 18 and is subsequently removed after application. The adhesive 30 is selected for optimal adhesion to the one of the wheel substrate 12 or the intermediate polymeric coating 24, whichever is selected for desired appearance.

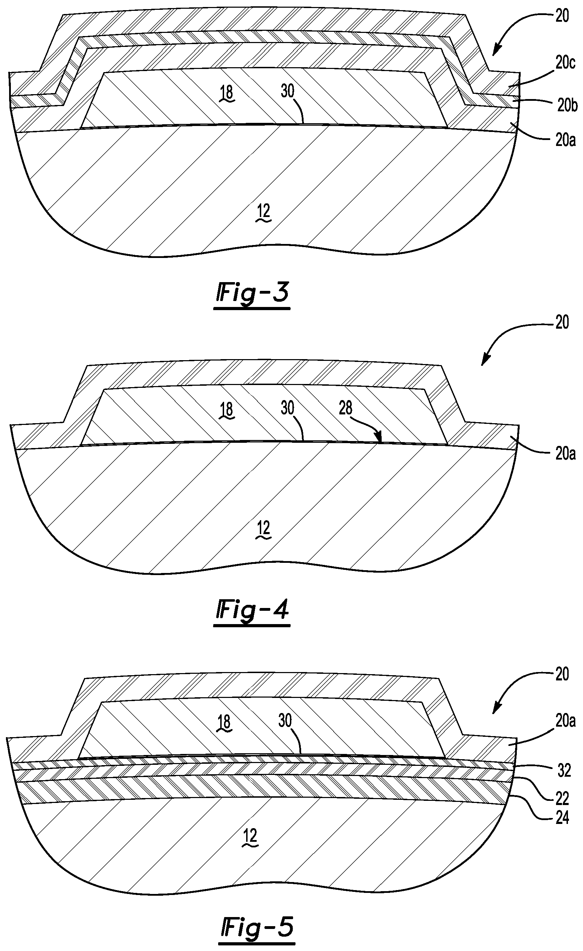

Figure 3 shows an alternative embodiment where the applique 18 is adhered to the substrate 12 of the wheel 10 as is explained hereinabove. Prior to adhering the applique 18 to the wheel 10, the wheel 10 surface is cleaned and treated with at least one of a dry conversion coating or conventional conversion coating to improve adhesion of the applique 18 and of the polymeric over-coating 20 upon application. In this embodiment, multiple polymeric over-coatings may be implemented. As in the first embodiment, a first polymeric -over-coating 20a is applied over both the applique 18 and the wheel 10 presenting a continuous polymeric surface. A second polymeric over-coating 20b and a third polymeric over-coating 20c are sequentially applied. Each of the polymeric coatings 20a, 20b, 20c may be a clear, transparent coating or include differing levels of pigmentation, dye or tint to achieve different aesthetics or depth to the face 13 of the wheel 10 and to the applique 18. Further, only two layers of polymeric over-coating 20a, 20b may be applied over the applique 18 and the wheel 10 to provide differing levels of environmental protection, durability and aesthetics.

Figure 4 shows a still further alternative embodiment where the applique 18 is adhered to the substrate 12 of the wheel 10 and only the first polymeric over-coating 20a is applied. The first polymeric coating 20a again presents a continuous polymeric surface of the applique 18 and the wheel 10. The wheel 10 in this embodiment, and in other embodiments where the applique 18 is adhered to the substrate 12, a previously applied polymeric coating may be mechanically removed prior to adhering the applique 18. The machined surface, in this embodiment the upper surface 28 of the face 13 (Figure 1), is subject to cleaning and either dry conversion or conventional conversion coatings to improve adhesion of the applique 10 and the first polymeric coating.

Figure 5 shows a further embodiment of the invention of the present application that includes a PVD metalized layer 32. As is known to those of skill in the art, PVD is a process for physical vapor deposition of metals and metal alloys on a wheel or polymeric coating of a wheel providing a metallic appearance. Therefore, this embodiment includes the applique 18 being adhered directly to the PVD metalized layer 32 by way of an adhesive 30. As such, it may be desirable to modify the adhesive 30 used to adhere the applique 18 to the PVD metalized layer 32 from that which is used to adhere the applique 18 to a polymeric coating. Prior to applying the PVD metalized layer 32, the base polymeric coating 22 is applied to the substrate 12 of the wheel 10. The intermediate polymeric coating 24 is applied over the base polymeric coating 22 prior to the application of the PVD metalized layer 32 to achieved desired adhesion of the PVD metalized layer to the wheel 10. Therefore, the base polymeric coating 22, the intermediate polymeric coating 24 and the PVD metalized layer 32 are applied in sequential order between the applique 18 and the wheel substrate 12.

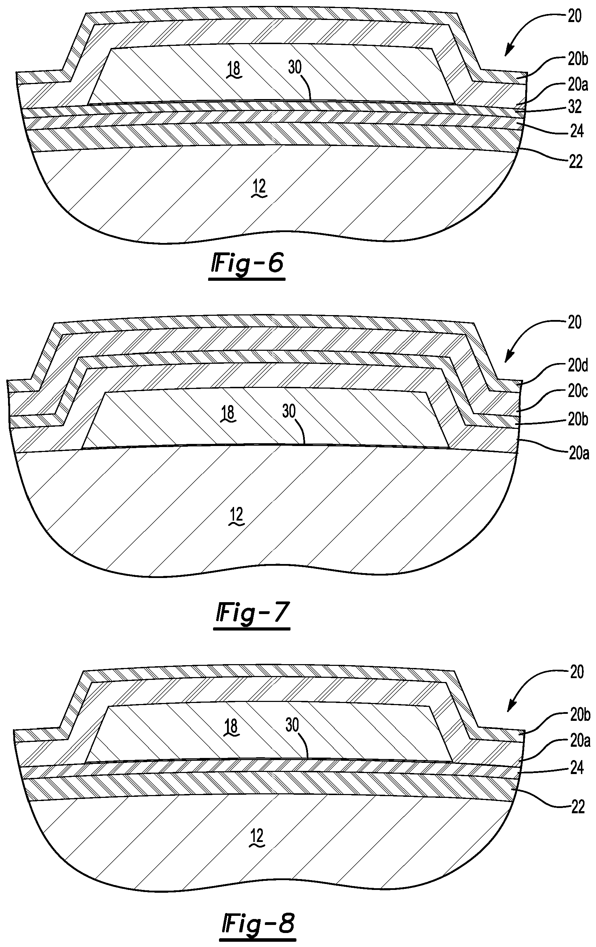

Figure 6 shows a still further embodiment that includes a modified first polymeric overcoat 20a is applied over the wheel 10 and a second polymeric over-coat 20b is applied over the first polymeric over-coat 20a. Therefore embodiment shown in Figure 6 is a modification of the embodiment shown in Figure 5 that includes two polymeric over-coats 20a, 20b to achieve additional distinguishing visual characteristics. The applique 18 is adhered via the adhesive 30 to the PVD metalized layer 32 that has been deposited over the intermediate polymeric coating 24 and the base polymeric coating 22. The second polymeric over coat 20b includes colorization by way of pigmentation or tint while maintaining translucence or transparency so that the applique 18 is visible. Alternatively, the gloss level of the second polymeric over coat 20b is modified to a mid, low level, or matted gloss level to provide even different aesthetics. In this embodiment, the first polymeric overcoat 20a includes no additional colorization and is substantially clear to illuminate the applique 18.

Figure 7 shows a further embodiment including the third polymeric over-coat 20c and a fourth polymeric over-coat 20d that are sequentially applied prior to the first polymeric over-coat 20a and the second polymeric over-coat 20b as set forth in Figure 6. The multiple layers of polymeric over-coate 20a, 20b, 20c and 20d achieve aesthetics provided in the embodiment shown in Figure 6 including variants in gloss level, translucence, and colorization as explained hereinabove. However, in this embodiment, the applique 18 is applied via the adhesive 30 directly to the wheel substrate 12. The wheel substrate 12, in this embodiment may be machined to provide a "bright shiny" surface to provide an even different aesthetic to the multiple layers of polymeric over-coat 20a, 20b, 20c and 20d while these layers also provide enhanced durability to the wheel substrate 12 and the applique 18.

Figure 8 shows a further embodiment where the applique 18 is adhered to the intermediate polymer coating 24. As in earlier embodiments, the intermediate polymeric coating 20 is applied to the base polymeric coating 22 that is applied to the substrate 12 of the wheel 10. The first polymeric over-coating 20a is applied over the applique 18 and the intermediate polymeric coating 24 and the second polymeric over-coating 20b is applied over the first polymeric over-coating 20a. As such, the aesthetic surrounding the applique 18 is modified by the interaction between the first polymeric over-coating 20a and the intermediate polymer coating 28 that may be pigmented with colored pigments or metallic flake to achieve unique reflective interaction with first and second polymeric over-coatings 20a, 20b.

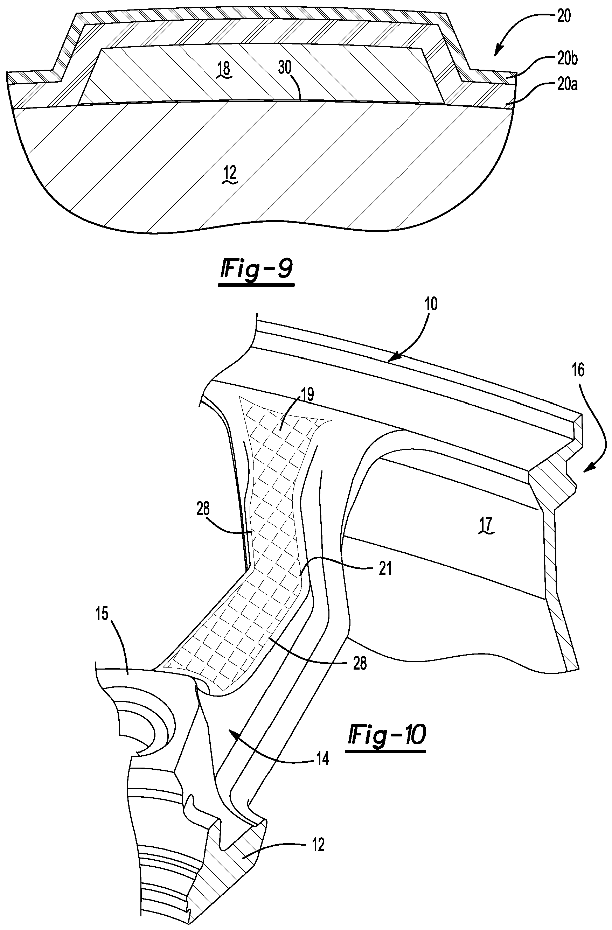

Figure 9 shows a still further embodiment in which the applique 18 is applied via the adhesive 30 to the substrate 12 of the wheel over which the first polymeric over-coat 20a is applied followed by application of the second polymeric over-coat 20b that may include high, mid or low gloss level, and includes pigmentation, dye or other colorant while allowing at least some level of transparency. Therefore, additional alternative aesthetics of the applique 18 and of the surface of the substrate 12 are further modified.

It should be apparent to those of ordinary skill in the art after reading the disclosure set forth herein, that unique and distinguishing aesthetics are achievable through the applique 18 of the present invention and by modifying the sequence and types of polymeric coatings and PVD metallic layers. Applying polymeric coatings over the applique 18 to achieve a continuous and polymeric or substrate 12 of the wheel 10 provides not only unique opportunities for alternative aesthetics presenting, when desired, an appearance that the applique is part of the wheel substrate 12, but also provides uniform and improved durability to the wheel 10.

Figure 10 shows an alternative applique 19 presenting a textured surface to generate depth for a unique aesthetic appearance without a need for costly machining or tooling. While shown adhered to the mating portion 21, the applique 19 can be placed on any wheel surface to achieve the unique aesthetic. Further, any type of the coating combinations shown in Figures 2 through 9 may be used to alter the appearance of the alternative applique 19.

Referring now to Figure 13, a process flow diagram shows the steps of one embodiment of manufacturing the wheel of the present invention that incorporates the decorative applique 18. STEP 100, the wheel enters an applique 18 install station. STEP 200, the applique 18 is applied either to the wheel substrate 12 or previously applied polymer coatings 22, 28, or PVD coating as required of a desired wheel appearance. The applique 18 is applied either manually, for low volume production, or robotically, for high volume production. STEP 300, the wheel exits the applique install station after the applique 18 has been adhered to the wheel either mechanically or by way of adhesive as described above. It should also be understood that the wheel is transferred between stations on a moving assembly line. Alternatively, the stations are modular and various methods of transfer are employed.

Following exit from the applique install station, alternative processing may take place, depending upon the desired appearance of the wheel. In one embodiment, STEP 600, the wheel is transferred to an extra processing cell where the wheel is subject to milling, machining, turning, or the like to reshape the wheel configuration or expose the substrate 12 after the applique 18 has been adhered. In this step, the applique is located in the mating portion 21 of the spoke 14 beneath the upper surface 28 to avoid being damage during the milling or turning operation. It should be understood that while the present application discloses in detail locating the applique 18 on a spoke 14, the applique 18 could be located anywhere on the the face portion 15 of the wheel, including but not limited to the central portion 15. Further, the applique 18 could also be located on the bead 17 defined by the rim portion 16. Following STEP 600, the wheel necessarily requires cleaning and application of a conversion coating, which is achieved in a pretreatment cell identified in STEP 700. Following the pretreatments cell, the wheel is transferred again to the clear polymeric over-coat cell identified as STEP 400 in Figure 13.

In an alternative embodiment, following applique application performed in STEP 300, the wheel is immediately transferred to the clear polymer coating cell identified as STEP 400. In both embodiments, the clear polymeric over-coat 20, as explained above, may include liquid or powder compositions or be formulated for infrared or heated curing. According to the invention, the wheel is transferred to bake oven identified as STEP 500a. In an alternative not forming part of the invention, in which the clear polymer coating requires infrared curing, the wheel is transferred to an infrared curing cell identified as STEP 500b. After curing, the wheel is inspected and packed for shipping at STEP 800. It should be understood that the assembly process is completely flexible and adapted to hand both heat curing wheels and infrared curing on the same assembly line by making use of various transfer conveyor technology. It should also be understood that the process steps could include a PVD metal application step in which the applique 18 is either adhered to the PVD metal, or the PVD metal coating is covered with a clear polymeric coating or the applique is adhered to the clear polymeric coating.

Obviously, many modifications and variations of the present invention are possible in light of the above teachings. The foregoing invention has been described in accordance with the relevant legal standards; thus, the description is merely exemplary than limiting in nature. Variations and modifications to the disclosed embodiment may become apparent to those skilled in the art and do come within the scope of this invention. Accordingly, the scope of a legal protection afforded this invention can only be determined by studying the following claims.

## Claims

1. A method of decorating a vehicle wheel (10), comprising the steps of:
forming a vehicle wheel defined by an alloy substrate (12) including a face (13) and a rim portion (16), said face defining a plurality of spokes (14) extending radially outwardly between a central portion (15) of said face and said rim portion;
providing (200) an applique (18) including a decorative feature and adhering said applique to one of the alloy substrate of said wheel, a PVD metalized layer (32) adhered to said wheel and a polymer covering said alloy substrate of said vehicle wheel by means of an adhesive (30);
applying (400) a first transparent polymer coating (20; 20a) over said applique and said vehicle wheel thereby forming a continuous polymer surface extending over said applique and said vehicle wheel; and
curing (500a) said first transparent polymer coating applied over said applique and said vehicle wheel in a coating bake oven.

2. The method set forth in claim 1, wherein said step of applying a first transparent polymeric coating is further defined by presenting a same gloss level over said applique and said wheel.

3. The method set forth in claim 1, wherein said step of applying a first transparent polymeric coating is further defined by said transparent polymeric coating being tinted.

4. The method set forth in claim 1, further including a step of applying a primer polymeric coating (22) over said alloy substrate prior to adhering said applique to said wheel thereby adhering the applique to said primer polymeric coating.

5. The method set forth in claim 1, further including applying a primer polymeric coating over said alloy substrate, then removing the primer polymeric coating from said alloy substrate of said wheel beneath said applique prior to adhering said applique to said wheel thereby adhering said applique to said alloy substrate.

6. The method set forth in claim 1, further including applying a primer polymeric coating over said alloy substrate, then applying an intermediate polymeric coating (24) over said primer polymeric coating prior to adhering said applique to said wheel thereby adhering said applique to said intermediate polymeric coating.

7. The method set forth in claim 6, further including a step of applying a second transparent polymeric coating (2ob) over said first polymeric coating (20a).

8. The method set forth in claim 7, wherein said step of applying a second transparent polymeric coating over said first polymeric coating is further defined by coloring said second transparent polymeric coating.

9. The method set forth in claim 1, further including a step of applying the PVD metalized layer over a primer polymeric coating prior to adhering said applique to said wheel.

10. The method set forth in claim 1, wherein said step of applying an applique to said wheel is further defined by applying a three dimensional applique to said wheel.

11. The method set forth in claim 1, further including a step of providing cooperable locating features on at least one of said wheel and said applique for locating said applique on said wheel.

12. The method set forth in claim 7, wherein said second polymeric coating is at least one of tinted, pigmented, low gloss level, and mid gloss level.

13. A vehicle wheel (10), comprising:
a wheel defined by a wheel alloy substrate (12) including a face (13) and a rim portion (16), said face defining a plurality of spokes (14) extending radially outwardly between a central portion (15) of said face and said rim portion;
said wheel defining a mating portion (21);
an applique (18) affixed to one of said alloy substrate of said wheel, a PVD metalized layer (32) adhered to said wheel and a polymer covering said alloy substrate of said wheel at said mating portion with an adhesive (30);
**characterized by** a polymer over-coating (20; 20a) being substantially transparent extending over said applique and said wheel substrate thereby defining a continuous polymer surface over said applique and said wheel substrate; said polymer over-coating being cured in a coating bake oven.

14. The vehicle wheel set forth in claim 13, wherein said polymer over-coating provides a same gloss level over said applique and said wheel substrate.

15. The vehicle wheel set forth in claim 13, wherein said polymer over-coating includes coloring.

16. The vehicle wheel set forth in claim 13, wherein said polymer over-coating includes a plurality of polymer layers.

17. The vehicle wheel set forth in claim 13, further including a primer polymer coating (22) disposed being adhered to said wheel substrate beneath at least one of said applique and said polymer over-coating.

18. The vehicle wheel set forth in claim 17, further including an intermediate coating (24) disposed between said primer polymer coating beneath at least one of said applique and said polymer over-coating.

19. The vehicle wheel set forth in claim 17, further including the PVD metalized layer disposed between said primer polymer layer and said at least one of said applique and said polymer over-coating.

20. The vehicle wheel set forth in claim 17, wherein said wheel substrate is visible through said polymer over-coat.

21. The vehicle wheel set forth in claim 13, wherein said applique is three dimensional.

22. The vehicle wheel set forth in claim 13, wherein said applique is two dimensional.

## Patentansprüche

1. Ein Verfahren zum Dekorieren eines Fahrzeugrads (10), das die folgenden Schritte aufweist:
Bilden eines Fahrzeugrads, das durch ein Legierungssubstrat (12) definiert ist, das eine Front (13) und einen Felgenabschnitt (16) beinhaltet, wobei die Front eine Vielzahl von Speichen (14) definiert, die sich radial nach außen erstrecken zwischen einem zentralen Abschnitt (15) der Front und dem Felgenabschnitt;
Bereitstellen (200) einer Applikation (18), die ein dekoratives Merkmal beinhaltet, und Anheften der Applikation an eines von dem Legierungssubstrat des Rads, einer PVD-metallisierten Schicht (32), die an dem Rad anhaftet, und einem Polymer, das das Legierungssubstrat des Fahrzeugrads bedeckt, mittels eines Haftmittels (30);
Aufbringen (400) einer ersten transparenten Polymerbeschichtung (20; 20a) über der Applikation und dem Fahrzeugrad, wodurch eine kontinuierliche Polymeroberfläche gebildet wird, die sich über die Applikation und das Fahrzeugrad erstreckt; und
Aushärten (500a) der ersten transparenten Polymerbeschichtung, die über der Applikation und dem Fahrzeugrad aufgebracht wird, in einem Beschichtungsbrennofen.

2. Das Verfahren nach Anspruch 1, wobei der Schritt von Aufbringen einer ersten transparenten Polymerbeschichtung ferner definiert ist durch Vorlegen eines gleichen Glanzgrads über der Applikation und dem Rad.

3. Das Verfahren nach Anspruch 1, wobei der Schritt von Aufbringen einer ersten transparenten Polymerbeschichtung ferner dadurch definiert ist, dass die transparente Polymerbeschichtung getönt ist.

4. Das Verfahren nach Anspruch 1, ferner beinhaltend einen Schritt von Aufbringen einer Grundierungspolymerbeschichtung (22) über dem Legierungssubstrat vor Anheften der Applikation an das Rad, dadurch Anheften der Applikation an die Grundierungspolymerbeschichtung.

5. Das Verfahren nach Anspruch 1, ferner beinhaltend Aufbringen einer Grundierungspolymerbeschichtung über dem Legierungssubstrat, dann Entfernen der Grundierungspolymerbeschichtung von dem Legierungssubstrat des Rads unter der Applikation vor Anheften der Applikation an das Rad, dadurch Anheften der Applikation an das Legierungssubstrat.

6. Das Verfahren nach Anspruch 1, ferner beinhaltend Aufbringen einer Grundierungspolymerbeschichtung über dem Legierungssubstrat, dann Aufbringen einer Zwischenpolymerbeschichtung (24) über der Grundierungspolymerbeschichtung vor Anheften der Applikation an das Rad, dadurch Anheften der Applikation an die Zwischenpolymerbeschichtung.

7. Das Verfahren nach Anspruch 6, ferner beinhaltend einen Schritt von Aufbringen einer zweiten transparenten Polymerbeschichtung (20b) über der ersten Polymerbeschichtung (20a).

8. Das Verfahren nach Anspruch 7, wobei der Schritt von Aufbringen einer zweiten transparenten Polymerbeschichtung über der ersten Polymerbeschichtung ferner durch Einfärben der zweiten transparenten Polymerbeschichtung definiert ist.

9. Das Verfahren nach Anspruch 1, ferner beinhaltend einen Schritt von Aufbringen der PVD-metallisierten Schicht über einer Grundierungspolymerbeschichtung vor Anheften der Applikation an das Rad.

10. Das Verfahren nach Anspruch 1, wobei der Schritt von Aufbringen einer Applikation auf das Rad ferner durch Aufbringen einer dreidimensionalen Applikation auf das Rad definiert ist.

11. Das Verfahren nach Anspruch 1, ferner beinhaltend einen Schritt von Bereitstellen zusammenwirkender Lokalisierungsmerkmale auf mindestens einem von dem Rad und der Applikation zum Lokalisieren der Applikation auf dem Rad.

12. Das Verfahren nach Anspruch 7, wobei die zweite Polymerbeschichtung mindestens eines ist von getönt, pigmentiert, niedrigem Glanzgrad und mittlerem Glanzgrad.

13. Ein Fahrzeugrad (10), aufweisend:
ein Rad definiert durch ein Radlegierungssubstrat (12) beinhaltend eine Front (13) und einen Felgenabschnitt (16), wobei die Front eine Vielzahl von Speichen (14) definiert, die sich radial nach außen erstrecken zwischen einem zentralen Abschnitt (15) der Front und dem Felgenabschnitt;
wobei das Rad einen Paarungsabschnitt (21) definiert;
eine Applikation (18), befestigt an einem von dem Legierungssubstrat des Rads, einer PVD-metallisierten Schicht (32), die an dem Rad anhaftet, und einem Polymer, das das Legierungssubstrat des Rads an dem Paarungsabschnitt mit einem Haftmittel (30) bedeckt;
**gekennzeichnet durch** eine Polymerüberbeschichtung (20; 20a), die im Wesentlichen transparent ist erstreckend über die Applikation und das Radsubstrat, dadurch definierend eine kontinuierliche Polymeroberfläche über der Applikation und dem Radsubstrat; wobei die Polymerüberbeschichtung in einem Beschichtungsbrennofen ausgehärtet wird.

14. Das Fahrzeugrad nach Anspruch 13, wobei die Polymerüberbeschichtung einen gleichen Glanzgrad über der Applikation und dem Radsubstrat bereitstellt.

15. Das Fahrzeugrad nach Anspruch 13, wobei die Polymerüberbeschichtung Einfärben beinhaltet.

16. Das Fahrzeugrad nach Anspruch 13, wobei die Polymerüberbeschichtung eine Vielzahl von Polymerschichten beinhaltet.

17. Das Fahrzeugrad nach Anspruch 13, ferner beinhaltend eine Grundierungspolymerbeschichtung (22), die angeordnet ist, um an das Radsubstrat unter zumindest einem von der Applikation und der Polymerüberbeschichtung anzuhaften.

18. Das Fahrzeugrad nach Anspruch 17, ferner beinhaltend eine Zwischenbeschichtung (24), die zwischen der Grundierungspolymerbeschichtung unter zumindest einem von der Applikation und der Polymerüberbeschichtung angeordnet ist.

19. Das Fahrzeugrad nach Anspruch 17, ferner beinhaltend die PVD-metallisierte Schicht, die zwischen der Grundierungspolymerschicht und dem zumindest einen von der Applikation und der Polymerüberbeschichtung angeordnet ist.

20. Das Fahrzeugrad nach Anspruch 17, wobei das Radsubstrat durch die Polymerüberbeschichtung sichtbar ist.

21. Das Fahrzeugrad nach Anspruch 13, wobei die Applikation dreidimensional ist.

22. Das Fahrzeugrad nach Anspruch 13, wobei die Applikation zweidimensional ist.

## Revendications

1. Procédé de décoration d'une roue de véhicule (10), comprenant les étapes suivantes :
formation d'une roue de véhicule définie par un substrat en alliage (12), comprenant une face (13) et une partie de jante (16), ladite face définissant une pluralité de rayons (14) s'étendant radialement vers l'extérieur entre une partie centrale (15) de ladite face et ladite partie de jante ;
fourniture (200) d'une applique (18) comprenant un élément décoratif, et collage de ladite applique à l'un parmi le substrat en alliage de ladite roue, une couche métallisée PVD (32) collée à ladite roue et un polymère couvrant ledit substrat en alliage de ladite roue de véhicule au moyen d'un adhésif (30) ;
application (400) d'un premier revêtement polymère transparent (20 ; 20a) par-dessus ladite applique et ladite roue de véhicule, en formant ainsi une surface polymère continue s'étendant par-dessus ladite applique et ladite roue de véhicule ; et
durcissement (5ooa) dudit premier revêtement polymère transparent appliqué par-dessus ladite applique et ladite roue de véhicule, dans un four de cuisson du revêtement.

2. Procédé selon la revendication 1, dans lequel ladite étape d'application d'un premier revêtement polymère transparent est définie en outre comme présentant un même niveau de brillance sur ladite applique et ladite roue.

3. Procédé selon la revendication 1, dans lequel ladite étape d'application d'un premier revêtement polymère transparent est définie en outre par le fait que ledit revêtement polymère transparent est mis en teinte.

4. Procédé selon la revendication 1, comprenant en outre une étape d'application d'un revêtement polymère primaire (22) par-dessus ledit substrat en alliage avant collage de ladite applique à ladite roue, en collant ainsi l'applique audit revêtement polymère primaire.

5. Procédé selon la revendication 1, comprenant en outre l'application d'un revêtement polymère primaire par-dessus ledit substrat en alliage, puis enlèvement du revêtement polymère primaire à partir dudit substrat en alliage de ladite roue en dessous de ladite applique avant collage de ladite applique à ladite roue, en collant ainsi ladite applique audit substrat en alliage.

6. Procédé selon la revendication 1, comprenant en outre l'application d'un revêtement polymère primaire par-dessus ledit substrat en alliage, puis l'application d'un revêtement polymère intermédiaire (24) par-dessus ledit revêtement polymère primaire avant collage de ladite applique à ladite roue, en collant ainsi ladite applique audit revêtement polymère intermédiaire.

7. Procédé selon la revendication 6, comprenant en outre une étape d'application d'un second revêtement polymère transparent (20b) par-dessus ledit premier revêtement polymère (20a).

8. Procédé selon la revendication 7, dans lequel ladite étape d'application d'un second revêtement polymère transparent par-dessus ledit premier revêtement polymère est définie en outre par une coloration dudit second revêtement polymère transparent.

9. Procédé selon la revendication 1, comprenant en outre une étape d'application de la couche métallisée PVD par-dessus un revêtement polymère primaire avant le collage de ladite applique à ladite roue.

10. Procédé selon la revendication 1, dans lequel ladite étape d'application d'une applique à ladite roue est définie en outre par application d'une applique tridimensionnelle à ladite roue.

11. Procédé selon la revendication 1, comprenant en outre une étape de fourniture d'éléments de positionnement pouvant collaborer ensemble sur au moins l'une parmi ladite roue et ladite applique, pour positionnement de ladite applique sur ladite roue.

12. Procédé selon la revendication 7, dans lequel ledit second revêtement polymère est au moins l'un parmi un revêtement mis à la teinte, pigmenté, à faible niveau de brillance et à niveau de brillance moyen.

13. Roue de véhicule (10), comprenant :
une roue définie par un substrat de roue (12) en alliage comprenant une face (13) et une partie de jante (16), ladite face définissant une pluralité de rayons (14) s'étendant radialement vers l'extérieur entre une partie centrale (15) de ladite face et ladite partie de jante ;
ladite roue définissant une partie d'accouplement (21) ;
une applique (18) fixée à l'un parmi ledit substrat en alliage de ladite roue, une couche métallisée PVD (32) collée à ladite roue et un polymère couvrant ledit substrat en alliage de ladite roue au niveau de ladite partie d'accouplement, à l'aide d'un adhésif (30) ;
**caractérisée par** un sur-revêtement polymère (20 ; 20a) sensiblement transparent, s'étendant par-dessus ladite applique et ledit substrat de roue, en définissant ainsi une surface polymère continue par-dessus ladite applique et ledit substrat de roue ; ledit sur-revêtement polymère étant durci dans un four de cuisson de revêtement.

14. Roue de véhicule selon la revendication 13, dans laquelle ledit sur-revêtement polymère assure le même niveau de brillance de ladite applique et dudit substrat de roue.

15. Roue de véhicule selon la revendication 13, dans laquelle ledit sur-revêtement polymère comprend une coloration.

16. Roue de véhicule selon la revendication 13, dans laquelle ledit sur-revêtement polymère comprend une pluralité de couches polymères.

17. Roue de véhicule selon la revendication 13, comprenant en outre un revêtement polymère primaire (22) disposé de façon à coller audit substrat de roue en dessous d'au moins l'un parmi ladite applique et ledit sur-revêtement polymère.

18. Roue de véhicule selon la revendication 17, comprenant en outre un revêtement intermédiaire (24) disposé entre ledit revêtement polymère primaire en dessous dudit au moins l'un parmi ladite applique et ledit sur-revêtement polymère.

19. Roue de véhicule selon la revendication 17, comprenant en outre une couche métallisée PVD disposée entre ladite couche polymère primaire et ledit au moins l'un parmi ladite applique et ledit sur-revêtement polymère.

20. Roue de véhicule selon la revendication 17, dans laquelle ledit substrat de roue est visible à travers ledit sur-revêtement polymère.

21. Roue de véhicule selon la revendication 13, dans laquelle ladite applique est tridimensionnelle.

22. Roue de véhicule selon la revendication 13, dans laquelle ladite applique est bidimensionnelle.
